# DEMANDE DE BREVET EUROPEEN

(11) **EP 0 612 553 A2**
(43) Date de publication de la demande: **31.08.1994**
(21) Numéro de dépôt: 94105844.8
(22) Date de dépôt: 01.10.1991
(51) Int. Cl.: B01D 53/04, C01B 13/02

(54) **Adsorbeur pour la séparation d'un mélange gazeux**

(30) Priorité: 11.10.1990 FR 9012537
(62) Demande divisionnaire de: 91402621.6
(71) Demandeur: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Hay, Léon, F-75013 Paris (FR)
(74) Mandataire: Le Moenner, Gabriel

(57) **Abrégé**

L'adsorbeur (1) est empli d'adsorbant entre des panneaux perforés (6) et (7) verticaux, avec au moins une partie (20) de faible granulométrie, inférieure à 1,7 mm et, typiquement, une partie (21) de plus forte granulométrie. Le gaz circule horizontalement entre les deux panneaux (6) et (7) formant fenêtres d'alimentation ou évacuation. Cette disposition permet de réduire la durée de cycle et d'assurer des bonnes performances de séparation avec un investissement moindre.

Application à la séparation gazeuse, notamment pour obtenir de l'oxygène à partir d'air.

## Description

La présente invention concerne un adsorbeur pour la séparation par adsorption d'au moins un constituant d'un mélange gazeux par variations cycliques de pression, du genre comprenant une enceinte renfermant au moins un adsorbant.

Les adsorbeurs sont réalisés sous forme :
- généralement de cylindres verticaux avec circulation verticale de gaz ;
- le cas échéant, pour les grosses tailles, de cylindres horizontaux, toujours avec circulation verticale de gaz.

Ces dispositions sont les plus pratiques pour le remplissage des adsorbeurs et permettent de conserver un lit d'épaisseur homogène de tamis moléculaire adsorbant même lorsque celui-ci se tasse (le tassement est évalué à environ 5 % pour des particules sphériques).

La section de passage est calculée pour que, lors de la circulation verticale ascendante, le gaz ne risque pas de "décoller" les grains d'adsorbant sous l'effet d'une vitesse excessive, ce qui conduirait en effet à réduire rapidement l'adsorbant en poussière sous l'action du phénomène d'attrition, ou frottement mutuel des particules.

Les adsorbeurs sont également étudiés pour avoir une distribution homogène de gaz. Celle-ci est facilement réalisable dans un cylindre vertical (ascendante et descendante), mais cette disposition ne convient qu'aux installations de faible capacité, du fait que la section de passage est alors technologiquement limitée.

L'objectif de l'invention est de proposer un adsorbeur perfectionné, avec un investissement plus faible, permettant de réduire la durée de cycle pour augmenter la productivité. Le volume d'adsorbant nécessaire peut alors être réduit, ainsi que la taille de l'adsorbeur, ces deux parties constituant une part importante de l'investissement de l'installation.

Pour ce faire, selon une caractéristique de l'invention, l'adsorbant est contenu dans une chambre définie entre deux panneaux perforés verticaux sensiblement parallèles et l'enceinte comporte des moyens latéraux d'admission/évacuation de gaz et, dans la zone supérieure de la chambre des moyens compensateurs de tassement de l'adsorbant dans la chambre.

La réduction de durée de cycle en-dessous de 2 x 45 secondes n'a pas à ce jour été réalisée dans des installations industrielles de capacité significative, telles par exemple une production d'oxygène supérieure à 5 tonnes/jour, pour les raisons suivantes :
- risque de baisse des performances avec les adsorbants actuels, en particulier baisse du rendement et augmentation de la consommation d'énergie. L'adsorption est en effet limitée par des phénomènes cinétiques ;
- vitesse de gaz trop importante et attrition de l'adsorbant dans les adsorbeurs actuels ;
- pertes de charge importantes également pour les épaisseurs de lits actuelles.

La présente invention permet de mettre en oeuvre un procédé de séparation par adsorption à durée de cycle comprise entre 20 secondes (2 x 10) et 60 secondes (2 x 30) avec des performances (rendement/énergie) maintenues à un haut niveau soit :
- un rendement de 40 à 60 % ;
- une productivité qui s'accroît alors à environ 45 Nm³/h/m³.

L'obtention de telles performances permet de diminuer par un facteur trois environ (rapport de productivités), le volume d'adsorbant et des adsorbeurs, et de réaliser ainsi une économie importante (20 à 50 %) sur l'investissement du matériel (qui comprend les adsorbeurs, vannes, tuyauteries et les machines nécessaires au fonctionnement du cycle).

Il est à noter que la taille des vannes, tuyaux et machines reste la même à partir du moment où le rendement est conservé entre une installation à 15 Nm³/h/m³ de productivité et celle à 45 Nm³/h/m³.

Le gain d'investissement est donc réalisé sur la quantité d'adsorbant (divisée par trois) et le coût des adsorbeurs : faible volume, transport et montage facilités.

Selon un aspect de l'invention, la masse d'adsorbant comporte avantageusement au moins une partie aval, par rapport au sens de cheminement sensiblement horizontal des gaz en phase de production, qui est formée de particules d'adsorbant fines, dont la granulométrie moyenne est inférieure à 1,7 mm, typiquement entre 0,4 et 1,5 mm, de préférence entre 0,8 et 1,2 mm, et on réalise un cycle de durée comprise entre 20 secondes et 60, typiquement entre 40 et 50 secondes, en limitant à 2 x 10⁴ Pa, typiquement entre 5 et 10 x 10³ Pa, la perte de charge entre entrée et sortie de la masse adsorbante lors de l'introduction du mélange gazeux à traiter.

Selon ces aspects de l'invention, la finesse granulométrique de l'adsorbant permet d'accroître la cinétique de l'adsorption, alors que la vitesse des gaz est accrue. De plus, une circulation horizontale des gaz permet de repousser l'apparition du phénomène d'attrition à des vitesses de cinq à sept fois supérieures à celles mises en oeuvre en circulation verticale ascendante.

L'invention prévoit en outre diverses caractéristiques, séparément ou en combinaison :
- on peut faire en sorte que la totalité de la masse adsorbante soit réalisée en particules fines de 0,4 - 1,7 mm, de préférence de 0,8 - 1,5 mm, ou bien une partie aval seulement de la masse adsorbante soit réalisée avec lesdites particules fines alors qu'une partie amont, selon le sens de cheminement du mélange gazeux en phase de production, est constituée de particules de granulométrie supérieure à 1,7 mm, par exemple de l'ordre de 2 mm. Dans ce second cas, le pourcentage en poids de particules fines d'adsorbant par rapport au poids total de la masse d'adsorbant est avantageusement compris entre 30 et 70 % ;
- les panneaux perforés s'étendent, au voisinage de l'extrémité supérieure de l'adsorbeur, jusqu'à une faible distance de la paroi de l'enceinte de l'adsorbeur, et les moyens compensateurs comportent une paroi déformable, par exemple réalisée en matériau élastique, définissant une chambre étanche équipée d'un embout de traversée de mise sous pression ou dépression gazeuse. Grâce à cette disposition, on peut assurer d'une part un maintien substantiel en position des particules d'adsorbant sous l'effet de compression de la paroi déformable, dû à la mise en oeuvre d'une pression qui est au moins égale à la pression haute de cycle, d'autre part et surtout éviter tout passage préférentiel du gaz dans un volume libre en tête d'enceinte, qui ne manquerait pas de se créer à la suite d'un tassement ultérieur inévitable de l'adsorbant.

D'autres caractéristiques et avantages de la présente invention ressortiront de la description suivante de modes de réalisation donnés à titre illustratif mais nullement limitatif, faite en relation avec les dessins annexés, sur lesquels :
- la figure 1 est une coupe selon un plan vertical d'un adsorbeur selon l'invention ; et

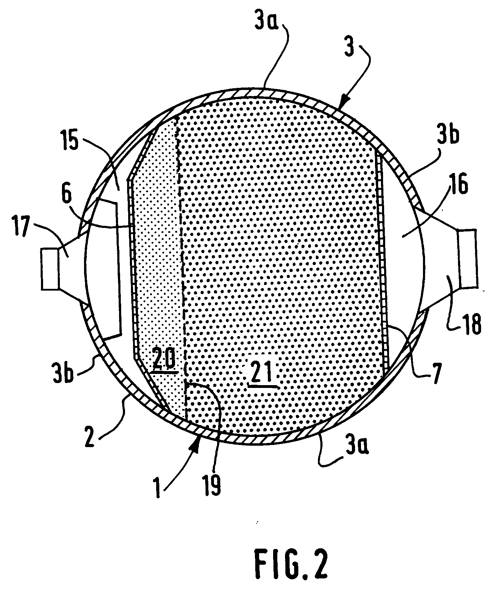

- la figure 2, une coupe horizontale de l'adsorbeur de la figure 1.

Dans le mode de réalisation représenté, l'adsorbeur 1 comporte une enceinte 2 avec une paroi latérale 3 en forme de virole cylindrique à extension dite longitudinale -ici verticale- qui est supérieure à son diamètre et fermée à ses extrémités par deux fonds bombés extérieurement 4 et 5. A l'intérieur de l'enceinte 2 sont agencés deux panneaux perforés parallèles 6 et 7, par exemple des grilles, qui s'étendent depuis le fond inférieur 5 jusqu'à une faible distance du fond supérieur 4, où ils se raccordent à la paroi latérale 3 par des parois transversales 8 et 8'. Un diaphragme ou membrane élastique 10 est fixé sur toute sa périphérie à la fois le long du bord interne 9 des parois transversales 8 et 8' et pour le reste à la paroi de l'enceinte 3 de façon à définir ainsi d'une part une chambre d'adsorbant 11 délimitée entre une partie 5a du fond 5, les panneaux perforés 6 et 7, une partie 3a de la paroi latérale 3 et la membrane 10 et, d'autre part, une chambre de compression étanche 12 de l'adsorbant 11 entre le fond supérieur 4 et la membrane 10. Le fond 4 est équipé à cet effet d'un embout tubulaire 13 pour mettre sous pression de service la chambre 12.

Les panneaux perforés 6 et 7 définissent extérieurement deux collecteurs internes de distribution gazeuse 15 et 16 entre chaque panneau 6 et 7 et la partie adjacente 3b de paroi latérale 3, une partie 5b du fond 5 et la paroi haute 8, et chaque collecteur 15-16 est équipé d'un large embout tubulaire 17, 18, respectivement, pour le raccordement à une conduite extérieure d'admission et/ou de soutirage de gaz.

Dans la réalisation représentée, la chambre d'adsorbant 11 est emplie d'adsorbants de granulométries différentes qui s'étendent côte à côte en deux strates verticales, en contact mutuel par une face de contact verticale 19. A gauche (sur les dessins) de la face 19 se situe l'adsorbant 20 le plus fin, de granulométrie comprise entre 0,4 et 1,7 mm, typiquement entre 0,8 et 1,5 mm, alors qu'à droite de cette face 19 se situe un adsorbant 21 de granulométrie habituelle, typiquement comprise entre 1,7 et 2,4 mm, généralement de l'ordre de 2 mm.

La mise en place de ces deux masses d'adsorbant est maintenant décrite :
L'adsorbeur est équipé sur une face verticale d'une pluralité de tronçons tubulaires 22 qui s'étendent radialement de l'extérieur de la paroi cylindrique 3 jusqu'à déboucher au travers du panneau perforé 6.

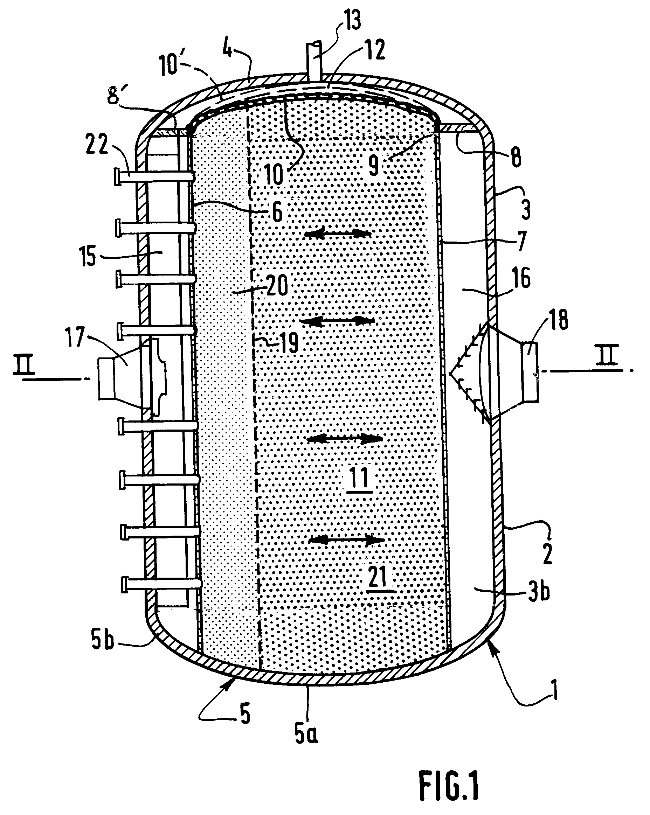

Sur le site de construction, l'adsorbeur 1 est placé sur champ, c'est-à-dire avec les tronçons tubulaires 22 verticaux et en position haute. On peut alors introduire, à travers les tronçons 22, des conduits et appareils de remplissage et dispersion de particules et on prend soin d'introduire d'abord les particules de plus forte granulométrie, puis les particules plus fines, pour constituer successivement la couche 21, puis la couche 20. Pendant cette opération, la chambre 12 est mise sous dépression et la membrane 10 est amenée au voisinage, voire au contact de la face interne du fond bombé 4 (position 10' à la figure 1), libérant ainsi le maximum d'espace pour les particules qui sont à l'état plus ou moins foisonnant. Après remplissage complet, une pression est appliquée dans la chambre de compression 12, de sorte que le diaphragme 10 reste appliqué contre la masse de particules en les comprimant (position 10 à la figure 1). Cette pression est maintenue ou entretenue définitivement.

Sur le site de production, l'adsorbeur est monté verticalement, comme représenté à la figure 1. L'entrée du mélange à traiter s'effectue par l'embout 18 et le collecteur 16 (sens dit co-courant), le panneau perforé 17 formant fenêtre d'entrée, alors que le collecteur 15, l'embout 17 et le panneau 6 formant fenêtre de sortie servent à différents soutirages (sens co-courant) et/ou admission (sens contre-courant). De même, différents soutirages peuvent s'effectuer par le collecteur 16 et l'embout 18 (sens contre-courant).

L'adsorbeur décrit peut être utilisé dans de nombreuses applications de séparation gazeuse, notamment pour obtenir de l'oxygène à partir d'air. Dans ce cas, l'adsorbant sera constitué par exemple de particules 5A pour la couche 21 et 13X pour la couche 20.

## Revendications

1. Adsorbeur pour la séparation de mélange gazeux, comprenant une enceinte (2) renfermant au moins un adsorbant (20, 21), caractérisé en ce que l'adsorbant (20, 21) est contenu dans une chambre (11) définie entre deux panneaux perforés verticaux sensiblement parallèles (6 ; 7) et en ce que l'enceinte comporte des moyens latéraux (17, 18) d'admission/évacuation de gaz et, dans la zone supérieure de la chambre (11), des moyens (10) compensateurs de tassement de l'adsorbant (20, 21) dans la chambre (11).

2. Adsorbeur selon la revendication 1, caractérisé en ce que les moyens compensateurs de tassement comprennent une paroi déformable (10) coopérant en contact de pression avec l'adsorbant (20, 21) et définissant au moins partiellement un volume de compression (12).

3. Adsorbeur selon la revendication 2, caractérisé en ce qu'il comporte des moyens (13) de raccordement du volume (12) à une source de pression ou de vide.

4. Adsorbeur selon la revendication 3, caractérisé en ce que les moyens de raccordement (13) s'étendent au travers d'une paroi supérieure (4) de l'enceinte (2).

5. Adsorbeur selon l'une des revendications 1 à 4, caractérisé en ce que l'adsorbant contient au moins des particules ayant une granulométrie inférieure à 1,7 mm.

6. Adsorbeur selon l'une des revendications précédentes, caractérisé en ce que l'adsorbant (20, 21) contient au moins deux types d'adsorbant de granulométries différentes.

7. Adsorbeur selon la revendication 6, caractérisé en ce que les deux types d'adsorbant (20, 21) sont disposés dans la chambre (11) suivant des strates verticales.

8. Adsorbeur selon l'une des revendications précédentes, caractérisé en ce que le mélange gazeux à séparer est un mélange d'azote et d'oxygène.
